# FASCICULE DE BREVET EUROPEEN

(11) **EP 1 928 741 B1**
(45) Date de publication et mention de la délivrance du brevet: **08.12.2010**
(21) Numéro de dépôt: 06793826.6
(22) Date de dépôt: 26.09.2006
(51) Int. Cl.: B64D 27/26

(54) **MÂT À OSSATURE MONOLITHIQUE**
MOTORMONTAGESTRUKTUR MIT EINSTÜCKIGEM RAHMEN
MONOLITHIC FRAMEWORK ENGINE MOUNTING STRUCTURE

(30) Priorité: 28.09.2005 FR 0552934
(43) Date de publication de la demande: 11.06.2008
(73) Titulaire: AIRBUS OPERATIONS, 31060 Toulouse (FR)
(72) Inventeur: LAFONT, Laurent, F-31320 Pechbusque (FR)
(74) Mandataire: Ilgart, Jean-Christophe
(86) Numéro de dépôt international: PCT/EP2006/066731
(87) Numéro de publication internationale: WO 2007/036516

(56) Documents cités:
- EP-A- 1 538 080
- FR-A- 2 698 068
- US-A- 4 437 627
- US-A- 6 126 110
- US-A1- 2005 082 423
- US-A1- 2005 274 485

## Description

### DOMAINE TECHNIQUE

La présente invention se rapporte de façon générale à un mât d'accrochage de moteur pour aéronef. Ce type de mât d'accrochage, également appelé EMS (de l'anglais « *Engine Mounting Structure* »), permet de suspendre par exemple un turboréacteur au-dessous de la voilure de l'aéronef, ou de monter le turboréacteur au-dessus de la voilure, par l'intermédiaire d'une pluralité d'attaches.

L'invention concerne plus particulièrement une nouvelle structure de mât et un procédé pour le fabriquer.

### ÉTAT DE LA TECHNIQUE ANTÉRIEURE

Dans les aéronefs, un mât d'accrochage est prévu pour constituer l'interface de liaison entre un moteur tel qu'un turboréacteur et une voilure de l'aéronef. Il permet de transmettre à la structure de l'aéronef les efforts générés par son turboréacteur associé, et autorise également le cheminement du carburant, de l'air, des systèmes électriques, et hydrauliques,... entre le moteur et l'aéronef.

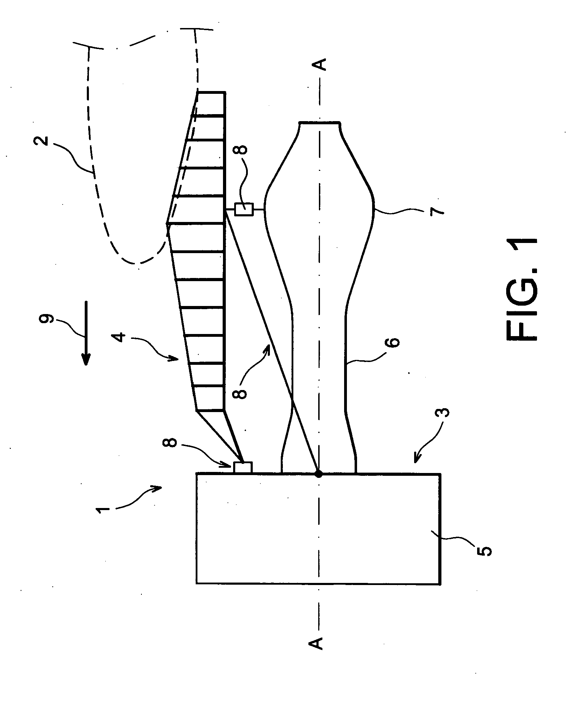

Ainsi, tel qu'illustré sur la figure 1, un ensemble moteur 1 pour aéronef est destiné à être fixé sous une aile 2 de l'aéronef, et comporte un moteur tel qu'un turboréacteur 3 et un mât d'accrochage 4. Le turboréacteur 3 dispose à l'avant d'un carter de soufflante 5 de grande dimension délimitant un canal annulaire de soufflante, et comporte vers l'arrière un carter central 6 de plus petite dimension, renfermant le coeur de ce turboréacteur ; le carter central 6 se prolonge vers l'arrière par un carter d'éjection 7 de plus grande dimension ; les carters 5, 6, 7, solidaires les uns des autres, s'étendent le long d'un axe AA.

Le mât d'accrochage 4, élément longitudinal s'étendant le long d'une direction principale parallèle à l'axe AA, ou légèrement inclinée par rapport à elle, est muni notamment d'une structure rigide portant une pluralité d'attaches de moteur 8 afin de solidariser le turboréacteur 3, et d'une autre série d'attaches (non représentées) permettant d'assurer la suspension de cet ensemble 1 sous la voilure 2 de l'aéronef.

A titre indicatif, il est noté que l'ensemble 1 est destiné à être entouré d'une nacelle (non représentée).

Dans toute la description qui va suivre, par convention, les termes « avant » et « arrière » se réfèrent à une direction d'avancement de l'aéronef suite à la poussée exercée par le turboréacteur 3, cette direction étant représentée schématiquement par la flèche 9.

Afin d'assurer la transmission des efforts, le mât 4 comporte habituellement une structure rigide, souvent du type « caisson », c'est-à-dire comprenant des arêtes composées d'éléments sous forme de barres et reliées par des panneaux.

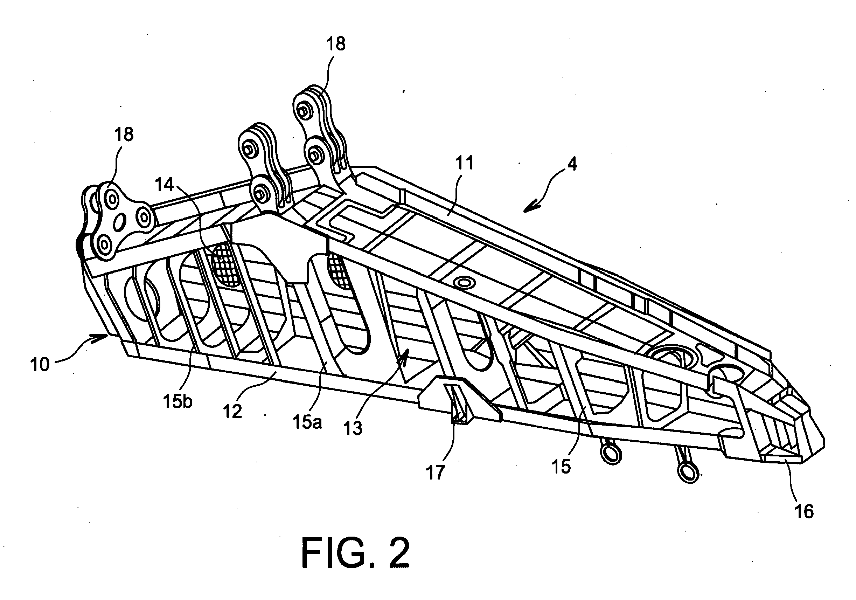

Un mode de réalisation classique est illustré en figure 2 : un mât d'accrochage classique comprend ainsi une structure rigide 10 qui se présente sous la forme d'un caisson formé par un longeron supérieur 11 et un longeron inférieur 12 s'étendant tous les deux dans une direction principale, proche de celle de l'axe AA du moteur 3. Deux panneaux latéraux 13 (seul le panneau arrière est visible sur la figure 2) viennent se positionner sur les flancs de l'armature 10 afin de « fermer » le mât 4. Les panneaux 13 comprennent de façon usuelle des ouvertures 14 permettant l'accès aux différents éléments localisés dans le mât 4.

A l'intérieur de ce caisson, des nervures transversales 15 espacées longitudinalement viennent renforcer la rigidité de la structure 10 : selon leur emplacement, les nervures 15a servent à la reprise d'effort, ou les nervures 15b permettent une stabilisation de la structure 10.

D'autre part, le mât 4 est muni d'un système de montage 8 interposé entre le turboréacteur 3 et la structure rigide 10 ; ce système 8 comporte au moins deux attaches moteur, généralement au moins une attache avant 16 et au moins une attache arrière 17 ; de plus, le système de montage 8 comprend un dispositif de reprise des efforts de poussée générés par le turboréacteur 3, par exemple sous la forme de deux bielles latérales raccordées d'une part à une partie arrière du carter de soufflante 5 du turboréacteur 3, et d'autre part à un point d'attache localisé entre attaches avant 16 et arrière 17.

De la même façon, le mât d'accrochage 4 comporte également un second système de montage 18 interposé entre la structure rigide 10 et la voilure 2 de l'aéronef, habituellement composé de deux ou trois attaches.

Enfin, le mât est pourvu d'une structure secondaire assurant la ségrégation et le maintien des systèmes tout en supportant des carénages aérodynamiques.

Le problème principal de cette structure 10 est la difficulté d'assemblage : il apparaît clairement que les différentes nervures 15a, 15b doivent être solidarisées une à une aux longerons 11, 12, et que leur localisation est précisément déterminée, du fait notamment de l'emplacement fixe des attaches 16, 17 du moteur, optimisé pour son fonctionnement. Par ailleurs, les différents moyens de fixation augmentent le poids du mât 4, ce qui est toujours un inconvénient dans le domaine aéronautique.

### EXPOSÉ DE L'INVENTION

L'invention propose une nouvelle structure pour le mât d'accrochage d'un aéronef, permettant de simplifier la fabrication et le positionnement des armatures de l'ossature du mât tout en conservant ses propriétés relatives à la sécurité.

Sous un de ses aspects, l'invention propose ainsi de procéder à l'assemblage de la structure du mât d'accrochage en deux étapes combinant des procédés différents, à savoir :
- la fabrication monolithique, par soudage, fonderie, ou tout autre procédé, de l'ossature du mât en tant que telle, c'est-à-dire les arêtes et éventuelles nervures (ainsi qu'éventuellement une des faces),
- puis la solidarisation mécanique des panneaux de fermeture du mât.

Le procédé de fabrication monolithique, au sens de l'invention, permet d'obtenir une ossature intégrale, unitaire, c'est-à-dire non démontable, même si elle peut être fabriquée à partir de différents éléments dans le cas du soudage.

De façon préférée, avant ou après fermetures, des ferrures de renfort sont également solidarisées mécaniquement aux endroits les plus sollicités.

Grâce à l'utilisation de deux techniques différentes, les avantages sont multipliés. De fait, l'intégration de l'ossature permet d'alléger le poids de cette dernière et sa durée de fabrication, en supprimant les redondances mécaniques occasionnées par les fixations. Par ailleurs, une fixation mécanique est conservée de sorte que le mât en tant que tel n'est pas « monobloc », structure fragile par rapport à l'usage qui en est fait : une structure totalement intégrée ne peut répondre que difficilement aux exigences de tolérance des structures aux endommagements pouvant être issus de défauts des matériaux, de fabrication ou de maintenance.

Sous un autre aspect, l'invention se rapporte à un mât d'accrochage de moteur pour un aéronef issu du procédé selon l'invention. Le mât comprend ainsi une structure monolithique, c'est-à-dire unitaire, intégrée, reprenant les arêtes du caisson, et d'éventuelles nervures, qui est solidarisée mécaniquement à au moins trois des quatre panneaux longitudinaux s'étendant le long de la direction principale du mât. Le mât comporte avantageusement des points d'attache destinés à la voilure et au moteur, chaque point d'attache pouvant être doublé par une ferrure de renfort solidarisée mécaniquement à l'ossature monolithique. De façon particulièrement préférée, les panneaux peuvent être en matériau composite et l'ossature en métal, par exemple le titane.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
La figue 1, déjà décrite, représente une vue schématique latérale d'un ensemble moteur partiel pour aéronef.
La figure 2, déjà décrite, illustre un mât d'accrochage selon l'état de la technique.
La figure 3 montre un mât d'accrochage selon un mode de réalisation préféré de l'invention.

### EXPOSÉ DÉTAILLÉ DE MODES DE RÉALISATION PARTICULIERS

Tel que précisé plus haut, la fabrication des mâts d'accrochage est un processus long et complexe. Cependant, au vu des charges reposant sur le mât et des conditions de sécurité respectées en aéronautique, peu de solutions sont offertes. En effet, la fonction primordiale du mât dans le fonctionnement de l'avion impose des critères stricts de fiabilité, par exemple par la fonction de sécurité intrinsèque, couramment dénommée « *Fail Safe* », pour laquelle une défaillance locale doit être compensée dans tous les cas.

L'invention propose ainsi un type de mât dont l'ossature, mais seulement elle, est de type monolithique et/ou intégrée, afin de remplir les exigences tout en allégeant tant la structure que le processus de fabrication. En effet, une intégration complète de la structure du mât ne permet pas de remplir les conditions posées : par exemple, si une crique apparaît sur le matériau d'un mât monolithique, elle peut se propager à l'ensemble de la structure, et entraîner des risques bien compris.

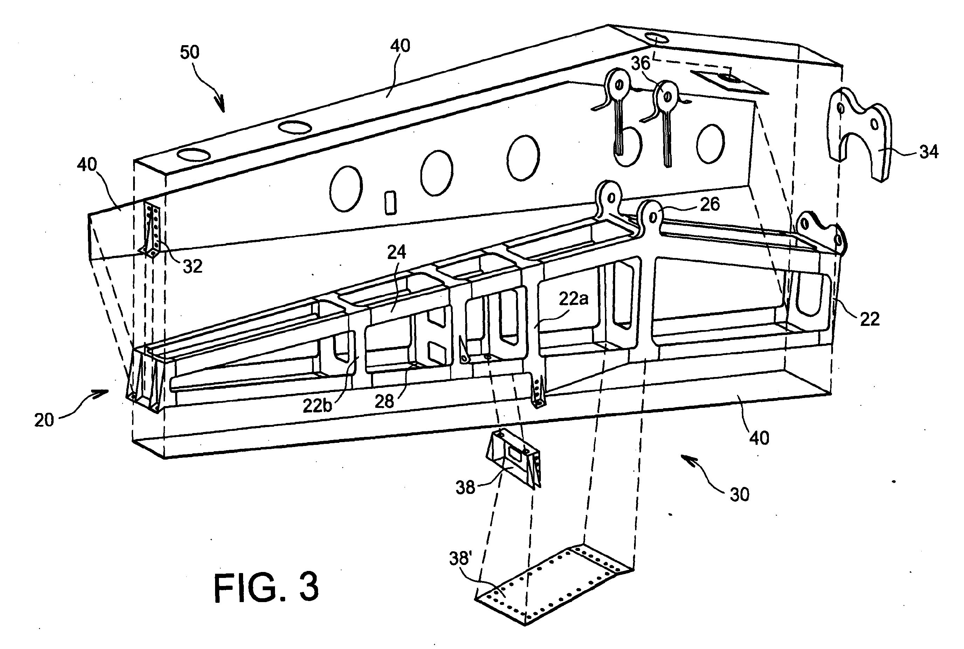

Selon l'invention et tel qu'illustré en figure 3, la structure monolithique ne concerne que l'ossature 20, c'est-à-dire le « squelette » du caisson : les nervures 22, les cornières d'angle 24 (c'est-à-dire les arêtes), les chemins primaires d'introduction des efforts 26 (notamment les points d'attache) sont réalisés de façon intégrée. La structure se présente alors sous la forme d'une ossature 20 permettant de définir une « boîte » de forme prédéfinie à quatre côtés s'étendant le long d'une direction principale, par adjonction de panneaux (couramment référés comme : supérieur, inférieur, latéral gauche et latéral droit) sur les faces longitudinales, et deux parties d'extrémité ; le terme « panneau », tel qu'illustré sur la figure 3, n'est pas considéré ici comme représentant une structure en deux dimensions : le panneau supérieur présente ainsi deux parties quasi-planes formant un angle entre elles, qui peuvent être unitaires ou non. Eventuellement, selon l'invention, un seul des panneaux longitudinaux (en particulier le panneau inférieur), ou une partie de celui-ci, peut être intégré dans l'ossature 20.

Selon un mode de réalisation, l'ossature 20 peut être formée par soudage d'une multiplicité de cornières d'angles 24 sur les différentes nervures 22, par exemple dans le sens longitudinal : une première nervure (formant aussi les arêtes d'extrémité) est positionnée, les quatre premières cornières d'angle (ou arêtes longitudinales) sont placées, puis une nervure 22 est soudée, puis quatre secondes arêtes longitudinales,.... L'ossature 20 ainsi fabriquée se présente finalement sous la forme d'une pièce unitaire, non démontable, dont le matériau est continu. Grâce à la structure selon l'invention, le positionnement des nervures de reprise d'effort 22a est donc moins contraignant étant donné qu'il est possible d'adapter de préférence la longueur des cornières d'angle 24.

Par un dessin adapté du squelette 20, les cordons de soudure 28 sont localisés en périphérie de squelette 20, de façon à permettre un accès facile aux têtes de soudage ainsi qu'aux outils permettant de retravailler ces cordons de soudure 28, par exemple par usinage ou meulage. Par ce mode de réalisation préféré, grâce à l'ébavurage désormais possible, la fiabilité des soudures peut être augmentée.

Selon un autre mode de réalisation, l'ossature 20 est par exemple réalisée par fonderie.

Selon un autre mode de réalisation, toutes les pièces élémentaires 22, 24 de l'ossature 20 sont positionnées sur un bâti formant une future face longitudinale, et soudées ; cet ensemble peut ensuite être mis dans un four pour qu'un traitement thermique dit « de détente », dont la durée et la température sont fonctions du matériau utilisé, lui soit appliqué, afin de libérer les contraintes engendrées par le soudage.

Il est à noter que la représentation graphique du mât n'est qu'illustrative. Notamment, les nervures 22 peuvent être composées de cadres ne se positionnant pas perpendiculairement à la direction principale du mât, mais par exemple à l'oblique. Le mât pourra présenter également diverses géométries, comme par exemple des cassures variées des faces inférieure et/ou supérieure (figure 3), différentes formes aérodynamiques des faces latérales gauche et/ou droite. La forme du mât pourra enfin être adaptée suivant le mode de reprise des attaches moteur et voilure. Toutes ces options sont facilitées par la simplicité des éléments de base constituant l'ossature 20.

Avantageusement, des ferrures 30 sont ajoutées au squelette ainsi formé, de préférence par fixation mécanique, afin de doubler les points d'attache 26 qui sont les plus critiques en termes d'effort. En particulier, un renfort d'attache avant 32 du moteur peut par exemple être vissé sur l'ossature, ainsi que des renforts d'attache voilure 34. Par ailleurs, le point d'attache arrière peut être doublé par un élément 38 pour ce qui est des efforts introduits par l'attache arrière moteur, et par un élément 38' pour ce qui concerne la reprise des efforts de poussée ; ces deux éléments 38, 38' peuvent être solidarisés eux aussi mécaniquement entre eux.

Ces ferrures 30, présentes en nombre moins important que dans la structure classique 10 et de formes simplifiées, ajoutent une fonction « *Fail Safe* » en ce qu'un endommagement de la structure de l'ossature 20 serait compensé par la ferrure 30.

L'ossature 20 est ensuite recouverte, avantageusement sur ses quatre faces longitudinales (ou sur les trois restantes), de panneaux de revêtement 40 qui y sont fixés mécaniquement. Les panneaux, contrairement à l'art antérieur, ont ici une simple fonction de peaux de recouvrement, et peuvent être de faible raideur, se prêtant sans difficulté, lors du montage, à la forme donnée par l'ossature 20. Cette qualité permet également d'effectuer des économies lors de leur fabrication et de leur mise en oeuvre.

Grâce à la structure selon l'invention, il est possible en outre de choisir une composition différente des panneaux 40 par rapport à l'ossature 20, et notamment de disposer d'un mât 50 dont l'ossature 20 est réalisée en acier, ou en titane, les ferrures 30 en acier spécial, et les panneaux 40 en matériau composite ; des panneaux 40 métalliques de même nature que le reste de la structure 20, 30 sont naturellement envisageables, ainsi que toute autre association acier, titane, alliage d'aluminium et composite.

L'invention relève ainsi d'un compromis entre une intégration propice aux gains en coût, en poids et à la diminution des risques de rupture aux jonctions, et des critères de sécurité maximale, avec double structure « *Fail Safe* ». Le mât 50 selon l'invention conserve toutes les redondances des caissons multi pièces connus pour une excellente tolérance aux dommages, tout en permettant un gain significatif amené par l'intégration dans l'ossature des chemins primaires d'introduction des efforts.

## Revendications

1. Mât d'accrochage (50) de moteur pour un aéronef ayant une structure de type caisson comprenant une ossature interne (20) s'étendant le long d'une direction principale munie de quatre panneaux (40) longitudinaux formant la périphérie de la structure le long de la direction principale, le mât (50) comprenant des points d'attache (26) destinés au moteur et/ou à la voilure, **caractérisé en ce qu'**au moins trois des panneaux longitudinaux (40) sont solidarisés mécaniquement à l'ossature (20) qui définit les arêtes (22, 24) du caisson et comprend les points d'attache (26), l'ossature (20) étant fabriquée de façon à être monolithique.

2. Mât d'accrochage selon la revendication 1 dans lequel l'ossature monolithique (20) comprend en outre des nervures (22a) au niveau des points d'attache (26) du mât (50), composées de cadres reliant les arêtes (24).

3. Mât d'accrochage selon la revendication 2 dans lequel l'ossature monolithique (20) comprend en outre des nervures de maintien (22b) composées de cadres reliant les arêtes (24).

4. Mât d'accrochage selon l'une des revendications 1 à 3 dans lequel les quatre panneaux longitudinaux (40) sont solidarisés mécaniquement à l'ossature monolithique (20).

5. Mât d'accrochage selon l'une des revendications 1 à 4 dans lequel l'ossature (20) a été réalisée par soudage (28) le long des arêtes (24), le soudage étant suivi d'un traitement thermique de détente afin de libérer les contraintes engendrées par le soudage.

6. Mât d'accrochage selon l'une des revendications 1 à 5 comprenant en outre des ferrures de renfort (30) solidarisées mécaniquement à l'ossature (20) au niveau des points d'attache (26).

7. Mât d'accrochage selon l'une des revendications 1 à 6 dans lequel l'ossature (20) est en titane et/ou les panneaux (40) sont en matériau composite.

8. Procédé de fabrication d'un mât d'accrochage de moteur pour aéronef de type caisson comprenant : la fabrication en une seule pièce de l'ossature du mât (20), et la fixation mécanique de panneaux (40) sur l'ossature (20).

9. Procédé de fabrication selon la revendication 8 dans lequel la fabrication en une pièce est réalisée par soudage suivi d'un traitement thermique de détente afin de libérer les contraintes engendrées par le soudage ou par fonderie.

10. Procédé de fabrication selon l'une des revendications 8 à 9 comprenant en outre la fixation mécanique de ferrures de renfort (30) sur l'ossature (20).

## Claims

1. Engine suspension pylon (50) for an aircraft, having a box type structure comprising an infernal frame (20) extending along a main direction, provided with four longitudinal panels (40) forming the periphery of the structure along the main direction, the pylon (50) comprising attachment points (26) intended for the engine and/or the wings, **characterised in that** at least three of the longitudinal panels (40) are mechanically fixed to the frame (20) that defines the edges (22, 24) of the box and comprises the attachment points (26), the frame (20) being manufactured so as to be monolithic.

2. Suspension pylon according to claim 1 in which the monolithic frame (20) also comprises ribs (22a) at the attachment points (26) of the pylon (50), composed of frames connecting the edges (24).

3. Suspension pylon according to claim 2 in which the monolithic frame (20) also comprises supporting ribs (22b) composed of frames connecting the edges (24).

4. Suspension pylon according to one of claims 1 to 3 in which the four longitudinal panels (40) are mechanically fixed to the monolithic frame (20).

5. Suspension pylon according to one of claims 1 to 4 in which the frame (20) has been manufactured by welding (28) along the edges (24), the welging being followed by a relaxation heat treatment so as to relax the stresses generated by welding.

6. Suspension pylon according to one of claims 1 to 5 also comprising stiffener fittings (30) mechanically fixed to the frame (20) at the attachment points (26).

7. Suspension pylon according to one of claims 1 to 6 in which the frame (20) is made from titanium and/or the panels (40) are made from a composite material.

8. Process for manufacturing a box type aircraft engine suspension pylon comprising: single piece manufacturing of the pylon frame (20), and mechanical attachment of panels (40) onto the frame (20).

9. Manufacturing process according to claim 8 in which the single piece manufacturing is made by welding followed by a relaxation heat treatment so as to relax the stresses generated by welding or by casting.

10. Manufacturing process according to one of claims 8 to 9 also comprising mechanical attachment of stiffener fittings (30) onto the frame (20).

## Patentansprüche

1. Triebwerkmontageanordnung (50) für ein Luftfahrzeug mit einer kastenartigen Struktur, die eine innere Konstruktion (20) umfaßt, die sich längs einer Hauptrichtung erstreckt, die mit vier Platten (40) in Längsrichtung versehen ist, die die Oberfläche der Struktur längs der Hauptrichtung bilden, wobei die Anordnung (50) Aufhängepunkte (26) umfaßt, die für das Triebwerk und/oder die Tragfläche bestimmt sind,
**dadurch gekennzeichnet, dass** mindestens drei der Längsplatten (40) mit der Konstruktion (20), die die Kanten (22, 24) des Kastens festlegt und die Aufhängepunkte (26) umfaßt, mechanisch verbunden sind, wobei die Konstruktion (20) derart hergestellt ist, dass sie monolithisch ist.

2. Montageanordnung nach Anspruch 1, wobei die monolithische Konstruktion (20) ferner Stege (22a) auf der Höhe der Aufhängepunkte (26) der Anordnung (50) umfaßt, die aus die Kanten (24) verbindenden Rahmen bestehen.

3. Montageanordnung nach Anspruch 2, wobei die monolithische Konstruktion (20) ferner Haltestege (22b) umfaßt, die aus die Kanten (24) verbindenden Rahmen bestehen.

4. Montageanordnung nach einem der Ansprüche 1 bis 3, wobei die vier Längsplatten (40) mechanisch mit der monolithischen Konstruktion (20) verbunden sind.

5. Montageanordnung nach einem der Ansprüche bis 4, wobei die Konstruktion (20) durch Schweißen (28) längs der Kanten (24) realisiert wurde, wobei auf das Schweißen ein Spannungsfreiglühen folgte, um durch das Schweißen erzeugte Spannungen zu lösen.

6. Montageanordnung nach einem der Ansprüche 1 bis 5, das ferner Verstärkungsbeschläge (30) umfaßt, die auf der Höhe der Aufhängepunkte (26) mechanisch mit der Konstruktion (20) verbunden sind.

7. Montageanordnung nach einem der Ansprüche 1 bis 6, wobei die Konstruktion (20) aus Titan ist und/oder die Platten (40) aus einem Verbundmaterial sind.

8. Verfahren zur Herstellung einer kastenartigen Triebwerkmontageanordnung für ein Luftfahrzeug, umfassend die Herstellung der Konstruktionsanordnung (20) in einem einzigen Stück und die mechanische Befestigung von Platten (40) an der Konstruktion (20).

9. Herstellungsverfahren nach Anspruch 8, wobei die Herstellung in einem Stück durch Schweißen und anschließendem Spannungsfreiglühen, um die durch das Schweißen erzeugten Spannungen zu lösen, oder durch ein Gießverfahren ausgeführt wird.

10. Herstellungsverfahren nach einem der Ansprüche 8 bis 9, das ferner die mechanische Befestigung von Verstärkungsbeschlägen (30) an der Konstruktion (20) umfaßt.
